# EUROPEAN PATENT SPECIFICATION

(11) **EP 2 145 833 B1**
(45) Date of publication and mention of the grant of the patent: **25.11.2015**
(21) Application number: 09165490.5
(22) Date of filing: 15.07.2009
(51) Int. Cl.: B65D 55/08, F16B 21/16

(54) **Anti-extraction retaining device for a member inserted inside a receiving body**
Antiextraktionsrückhaltevorrichtung für ein in einen Aufnahmekörper eingeführtes Element
Dispositif de rétention anti-extraction pour un élément inséré dans un corps récepteur

(30) Priority: 15.07.2008 IT TO20080100 U
(43) Date of publication of application: 20.01.2010
(73) Proprietor: ELBI International S.p.A., 10129 Torino (IT)
(72) Inventor: Magnone, Luca, I-10025 Pino Torinese (IT); Spisso, Angelo, I-10044 Pianezza (IT)
(74) Representative: Quinterno, Giuseppe

(56) References cited:
- DE-A1- 2 657 316
- DE-A1- 3 241 464
- DE-A1-102007 000 483
- US-A- 4 735 534

## Description

The present invention relates to a retaining device.

More specifically, the invention relates to a retaining device of the kind defined in the preamble of claim 1.

A device of that kind is disclosed in US 4 735 534 A.

One object of the present invention is to propose an improved retaining device.

This and other objects are achieved according to the invention with a retaining device having the features defined in claim 1.

Further characteristic features and advantages of the invention will become clear from the following detailed description provided purely by way of a non-limiting example, with reference to the accompanying drawings in which:
Figure 1 is a perspective view of a retaining device according to the present invention;
Figure 2 is a perspective view which shows a retaining device according to the invention in the assembled condition during use; and
Figure 3 is a cross-sectional view along the line III-III of Figure 2.

With reference to the drawings, a retaining device according to the invention comprises a flat element 1 which, in the example of embodiment shown, has a general C or U shaped configuration.

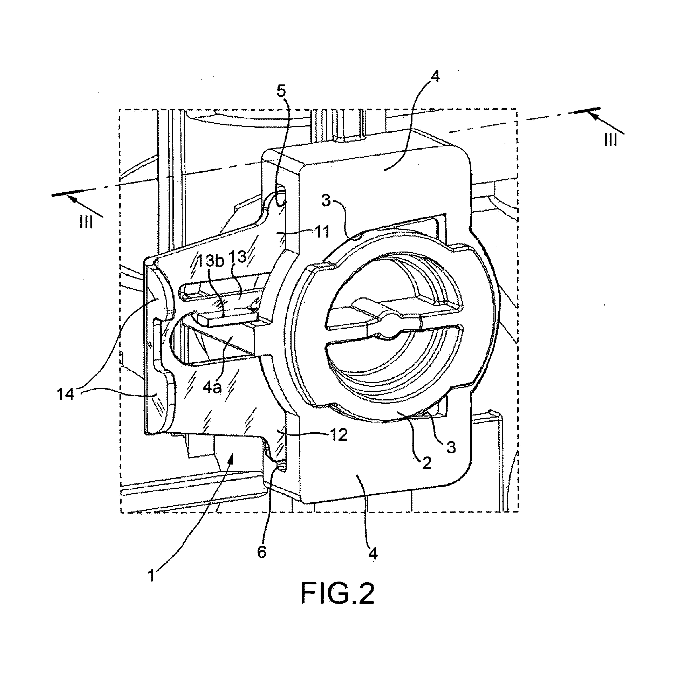

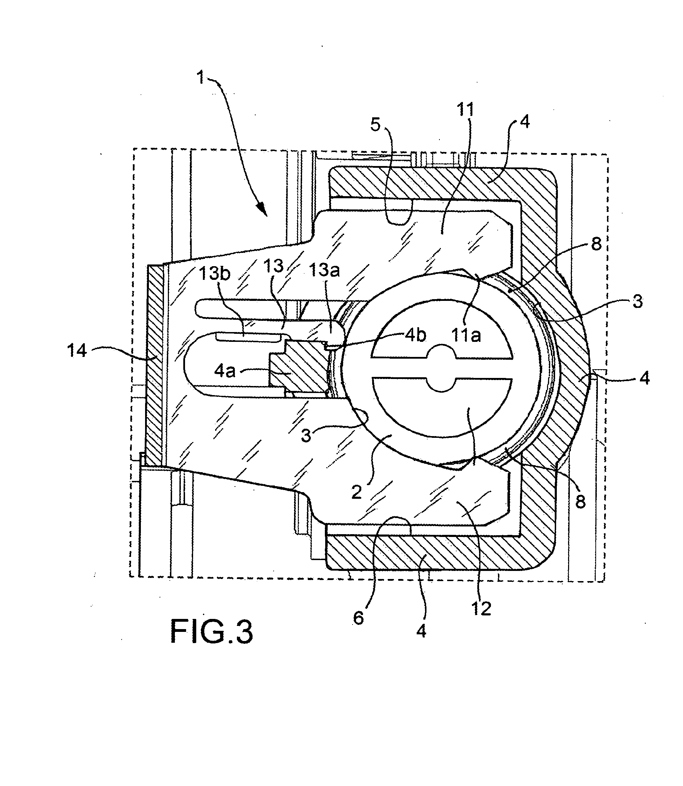

With reference to Figure 2, the flat retaining element 1 is intended to prevent extraction of a member 2, such as a closing stopper, inserted axially inside a front seat 3 (Figure 3) of a receiving body 4.

With reference to Figures 2 and 3, the receiving body 4 has, formed therein, a pair of transverse passages 5 and 6, i.e. top passage and bottom passage, respectively, which are vertically aligned with each other. These passages communicate with the seat 3, as can be seen more clearly in Figure 3, and are separated from each other, in the inlet zone, by a longitudinal cross-piece 4a of the receiving body 4 (Figures 2 and 3).

The flat retaining element 1 in the example of embodiment shown forms two main arms or prongs 11 and 12 which are intended to embrace, on opposite sides, the member or stopper 2 inserted inside the seat 3 of the receiving body, as can be seen in Figure 3.

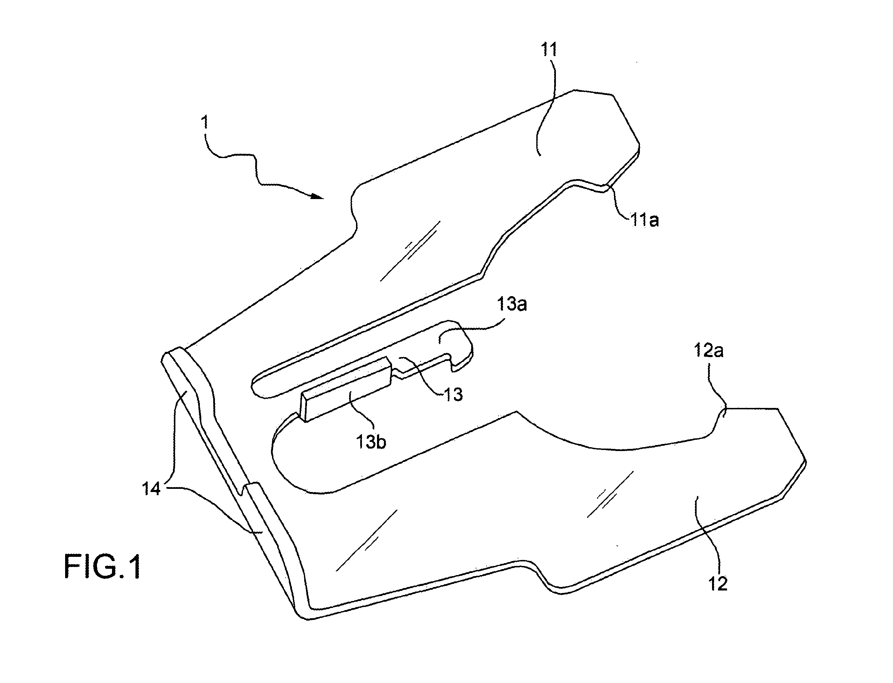

Preferably, although not necessarily, the arms or prongs 11 and 12, have respective inner profiles which form respective tips or teeth 11a, 12a (Figures 1 and 3), the distance between which is slightly smaller than the maximum diametral dimension of the portion of the member or stopper 2 with which they are intended to engage. Thus, when these prongs 11 and 12 are introduced into the corresponding transverse passages 5 and 6 of the receiving body 4, they engage, firstly by means of interference, with the corresponding portion of the member or stopper 2 and are elastically splayed until the respective tip-like portions 11a and 12a pass beyond the zone of the member of stopper 2 with the maximum diametral dimension.

Between the prongs 11 and 12, the flat element 1 forms a resilient longitudinal lug 13 terminating in a hook-like formation 13a. The latter is able to snap-engage with an associated retaining formation 4b of the receiving body 4. In the example of embodiment shown, the retaining member 4b consists of a step-like formation of the cross-piece 4a of the receiving body 4 (Figure 3).

Conveniently, the portion of the lug 13 which remains operationally outside the receiving body 4 forms an integral flange 13b which is folded at an angle of about 90° and is intended to facilitate deflection of this lug 13, in an upwards direction when viewing Figures 2 and 3, when it is required to disengage the hook-like formation 13a from the associated retaining formation 4b, in order to remove the flat retaining element 1 from the receiving body 4, so as to allow subsequent extraction of the member or stopper 2 from the corresponding seat.

Conveniently, although not necessarily, the end of the flat retaining element 1 opposite to that of the prongs 11 and 12 is folded, for example at an angle of about 90°, about a vertical axis, so as to define a shaped gripping flange 14 which is designed to facilitate extraction of the flat element 1 from the passages 5 and 6 of the receiving body 4.

The portion of the member or stopper 2 which is received inside the seat 3 of the receiving body has at least one transverse engaging formation which, in the embodiment shown, consists of a peripheral collar indicated by 8 in Figure 3. In the operating condition, the prongs 11 and 12 of the flat retaining element 1 are engaged between this engaging formation 8 of the member or stopper 2 and the inlet opening of the seat 3 so that extraction of this member or stopper 2 from the seat 3 is prevented.

## Claims

1. Retaining device comprising a receiving body (4) and a member (2) inserted axially inside a front seat (3) of the receiving body (4), said member (2) having at least one transverse engaging formation (8);
the retaining device also comprising a flat element (1) forming two main arms or prongs (11, 12) designed to co-operate with said engaging formation (8) of said member (2); said flat element (1) being provided with a snap-engageable hook-like formation (13, 13a);
the retaining device comprising further a pair of transverse passages (5, 6) communicating with said seat (3) formed in the receiving body (4);
said main arms or prongs (11, 12) of the flat element (1) being designed to be introduced inside said passages (5, 6) of the receiving body (4) so as to prevent extraction of said member (2) from the seat (3) of the receiving body (4);
the retaining device being **characterized by** comprising an associated retaining formation (4a, 4b) provided in the receiving body (4) in an inlet zone of said pair of transverse passages (5, 6);
said transverse engaging formation (8) being provided in a portion of said member (2) received inside the seat (3);
said hook-like formation (13, 13a) being arranged to snap-engage with said associated retaining formation (4a,4b) of the receiving body (4) so as to prevent extraction of said flat element (1) from said transverse passages (5, 6) of the receiving body (4).

2. Retaining device according to Claim 1, in which said main arms or prongs (11, 12) are designed to embrace on opposite sides a portion of said member (2), and the hook-like formation (13a) is formed in a lug (13) of said flat element (1) formed between said main arms or prongs (11, 12).

3. Retaining device according to Claim 1 or 2, in which said hook-like formation (13, 13a) has, associated therewith, a thrusting member (13b) designed to facilitate disengagement of said hook-like formation (13, 13a) from the corresponding retaining formation (4, 4b) of the receiving body (4).

4. Retaining device according to any one of the preceding claims, in which an end portion of said flat retaining element (1), opposite to that of said main arms or prongs (11, 12), is folded so as to form a gripping lug (14) designed to facilitate extraction of said flat retaining element (1) from said transverse passages (5, 6) of the receiving body (4)

## Patentansprüche

1. Rückhalteeinheit, aufweisend einen Aufnahmekörper (4) und ein Teil (2), das axial in einen vorderen Sitz (3) des Aufnahmekörpers (4) eingesetzt ist, welches Teil (2) zumindest eine transversale Eingriffanordnung (8) aufweist; welche Rückhalteeinheit auch ein flaches Element (1) aufweist, welches zwei Hauptarme bzw. -gabeln (11, 12) bildet, die für ein Zusammenwirken mit der Eingriffanordnung (8) des Teils (2) ausgelegt sind; welches flache Element (1) mit einer verrastbaren, hakenartigen Anordnung (13, 13a) vorgesehen ist;
welche Rückhalteeinheit ferner ein Paar transversaler Verbindungsgänge (5, 6) aufweist, die in Verbindung mit dem in dem Aufnahmekörper (4) gebildeten vorderen Sitz (3) stehen;
welche Hauptarme bzw. -gabeln (11, 12) des flachen Elements (1) dazu ausgelegt sind, in die Verbindungsgänge (5, 6) des Aufnahmekörpers (4) eingebracht zu werden, um einer Entnahme des Teils (2) aus dem Sitz (3) des Aufnahmekörpers (4) vorzubeugen;
welche Rückhalteeinheit **dadurch gekennzeichnet ist, dass** sie eine zugeordnete Rückhalteanordnung (4a, 4b) aufweist, die in dem Aufnahmekörper (4) in einem Einlassbereich des Paars transversaler Verbindungsgänge (5, 6) vorgesehen ist;
welche transversale Eingriffsanordnung (8) in einem Abschnitt des innerhalb des Sitzes (3) aufgenommenen Teils (2) vorgesehen ist;
welche hakenartige Anordnung (13, 13a) so angeordnet ist, dass sie mit der zugeordneten Rückhalteanordnung (4a, 4b) des Aufnahmekörpers (4) verrastet, um einem Herausnehmen des flachen Elements (1) aus den transversalen Verbindungsgängen (5, 6) des Aufnahmekörpers (4) vorzubeugen.

2. Rückhalteeinheit nach Anspruch 1, bei welcher die Hauptarme bzw. -gabeln (11, 12) dazu ausgelegt sind, einen Abschnitt des Teils (2) an entgegengesetzten Seiten zu umgreifen, und die hakenartige Anordnung (13a) an einem Vorsprung (13) des flachen Elements (1) zwischen den Hauptarmen bzw. -gabeln (11, 12) ausgebildet ist.

3. Rückhalteeinheit nach Anspruch 1 oder 2, bei welcher die hakenartige Anordnung (13, 13a) ein ihr zugeordnetes Betätigungselement (13b) aufweist, das dazu ausgelegt ist, ein Lösen der hakenartigen Anordnung (13, 13a) von der zugehörigen Rückhalteanordnung (4, 4b) des Aufnahmekörpers (4) zu erleichtern.

4. Rückhalteeinheit nach einem der vorstehenden Ansprüche, bei welcher ein Endabschnitt des flachen Rückhalteelements (1), welcher jenem mit den Hauptarmen bzw. -gabeln (11, 12) entgegengesetzt liegt, derart gebogen ist, dass es einen Greifvorsprung (14) bildet, der dazu ausgelegt ist, ein Herausnehmen des flachen Rückhalteelements (1) aus den transversalen Verbindungsgängen (5, 6) des Aufnahmekörpers (4) zu erleichtern.

## Revendications

1. Dispositif de rétention comprenant un corps récepteur (4) et un élément (2) inséré dans le sens axial dans un siège antérieur (3) du corps récepteur (4), lequel élément (2) possède au moins une structure d'engagement transversale (8) ;
le dispositif de rétention comprenant également un élément plat (1) formant deux griffes ou bras principaux (11, 12) conçus pour coopérer avec ladite structure d'engagement (8) dudit élément (2), ledit élément plat (1) étant muni d'une structure en forme de crochet encliquetable (13, 13a) ;
le dispositif de rétention comprenant en outre une paire de passages transversaux (5, 6) communiquant avec ledit siège (3) formé dans le corps récepteur (4) ;
lesdits griffes ou bras principaux (11, 12) de l'élément plat (1) étant conçus pour être insérés dans lesdits passages (5, 6) du corps récepteur (4) afin d'empêcher l'extraction dudit élément (2) du siège (3) du corps récepteur (4) ; **caractérisé en ce qu'**il comprend une structure de rétention associée (4a, 4b) prévue dans le corps récepteur (4) dans une zone d'entrée de ladite paire de passages transversaux (5, 6) ;
ladite structure d'engagement transversale (8) étant prévue dans une partie dudit élément (2) logée à l'intérieur du siège (3) ;
ladite structure en forme de crochet (13, 13a) étant disposée de façon à s'encliqueter avec ladite structure de rétention associée (4a, 4b) du corps récepteur (4) de façon à empêcher l'extraction dudit élément plat (1) desdits passages transversaux (5, 6) du corps récepteur (4).

2. Dispositif de rétention selon la revendication 1, dans lequel lesdits griffes ou bras principaux (11, 12) sont conçus pour enserrer par des côtés opposés une partie dudit élément (2), et la structure en forme de crochet (13a) est formée dans une patte (13) dudit élément plat (1) formée entre lesdits griffes ou bras principaux (11, 12).

3. Dispositif de rétention selon la revendication 1 ou 2, dans lequel ladite structure en forme de crochet (13, 13a) est associée à un élément de poussée (13b) conçu pour faciliter le dégagement de ladite structure en forme de crochet (13, 13a) hors de la structure de rétention correspondante (4, 4b) du corps récepteur (4).

4. Dispositif de rétention selon l'une quelconque des revendications précédentes, dans lequel une partie d'extrémité dudit élément de rétention plat (1) opposée à celle desdits bras ou fourches principaux (11, 12) est repliée de façon à former une patte d'accrochage (14) conçue pour faciliter l'extraction dudit élément de rétention plat (1) hors desdits passages transversaux (5, 6) du corps récepteur (4).
